# EUROPEAN PATENT SPECIFICATION

(11) **EP 0 304 196 B1**
(45) Date of publication and mention of the grant of the patent: **26.05.1993**
(21) Application number: 88307184.7
(22) Date of filing: 03.08.1988
(51) Int. Cl.: H02H 5/04, H02H 9/02

(54) **Electric motor armature current control circuit**
Stromüberwachungsschaltung für den Anker eines Elektromotors
Circuit de surveillance de courant d'un induit de moteur électrique

(30) Priority: 17.08.1987 US 86019
(43) Date of publication of application: 22.02.1989
(73) Proprietor: GENERAL MOTORS CORPORATION, Detroit Michigan 48202 (US)
(72) Inventor: Thornton, Dennis P., Centerville Ohio 45459 (US)
(74) Representative: Denton, Michael John

(56) References cited:
- US-A- 3 673 538
- US-A- 3 914 727
- US-A- 3 916 264
- US-A- 4 467 310

## Description

This invention relates to the limitation of excessive armature current in a wound armature electric motor and particularly to such limitation by polymer PTC (positive temperature coefficient) elements placed in series with the motor armature to carry the armature current. The material of such polymer PTC elements has a resistance below a trip temperature sufficiently low as to not significantly affect the armature current, the resistance rising sharply and greatly above the trip temperature.

Polymer PTC materials, which may have a cold resistance on the order of 0.5 ohm or less and a very sharp resistance change at the trip temperature, are more suitable than other PTC materials such as barium titanate (as, for example, shown in US patent no. 3886401) for use directly in series with a motor armature, since they have a comparatively low voltage drop and power dissipation. The material is heated directly by the armature current therethrough and trips when the heat generated by the armature current causes the temperature thereof to increase to the trip temperature. However, since the trip temperature is essentially constant, the trip time for an excessive armature current depends on the starting temperature of the PTC material. Such starting temperature is generally the ambient temperature, which may vary greatly in some environments such as motor vehicles.

The trip time following the onset of an excessive armature current must be short enough at low ambient temperatures to allow an increase in resistance in time to protect the motor. However, the trip time at high ambient temperatures must be sufficiently long to prevent nuisance tripping on short transient overcurrents that are not damaging to the motor. The problem is illustrated in Figure 3, which shows the variation of resistance over time for a single typical prior art polymer PTC element carrying an excessive motor armature current. It can be seen that the trip time is highly variable inversely with ambient temperature. It is desirable to reduce this variability.

US-A-3,673,538 discloses an armature current control circuit using a pair of PTC elements as in the pre-amble of claim 1.

The object of the present invention is to provide an electric motor armature current control circuit having a protection device which limits armature current at excessive temperature, in which the variation in trip time is reduced.

To this end, an electric motor armature current control circuit in accordance with the present invention is characterised over US-A-3,673,538 by the features specified in the characterising portion of claim 1.

The invention is an electric motor armature current control circuit comprising an electric motor having a field and an armature with armature windings, an electric power supply, and a protection device connected in series with the motor armature windings and electric power supply, whereby an armature winding current also flows through the protection device. The protection device comprises a pair of polymer PTC elements connected in electrical series with the motor armature windings and in electrical parallel and thermal contact with each other.

The first polymer PTC element has a resistance effective to generate heat with armature winding current flow therethrough and a first trip temperature higher than the maximum expected ambient temperature to which the first polymer PTC element is to be exposed in motor operation. Above the first trip temperature its resistance increases greatly from a low resistance essentially negligible in its effect on the armature winding current to a high resistance. The heat generated by normal armature current is effective to raise the temperature of the first polymer PTC element above the first trip temperature; and the resulting high resistance is effective to reduce electric current therethrough sufficiently as to make the first polymer PTC element self regulating at the first trip temperature.

The second polymer PTC element is maintained by the first through thermal contact at least at the first trip temperature. The second polymer PTC element has a resistance effective to generate heat with armature winding current flow therethrough and a second trip temperature sufficiently higher than the first to require excessive armature winding current to raise the temperature thereof to the second trip temperature. Above the second trip temperature the resistance of the second polymer PTC element increases greatly from a low resistance lower than that of the first polymer PTC element and essentially negligible in its effect on the armature winding current to a high resistance protectively limiting the armature winding current. The first polymer PTC element also has, at the second trip temperature, a high resistance protectively limiting the armature winding current. Therefore, the protection device limits excessive armature winding current after a period of time independent of ambient temperature.

The present invention will now be described, by way of example, with reference to the accompanying drawings, in which:-
Figure 1 is a combined perspective view and circuit diagram of a preferred embodiment of this invention, which view shows a motor armature current control circuit with a protection device and the structure of the protection device;
Figure 2 is a curve of electrical resistance vs. time for the embodiment of Figure 1; and
Figure 3 is a curve of electrical resistance vs. time for a prior art arrangement of a single polymer PTC element showing a high variability of trip time inversely with ambient temperature.

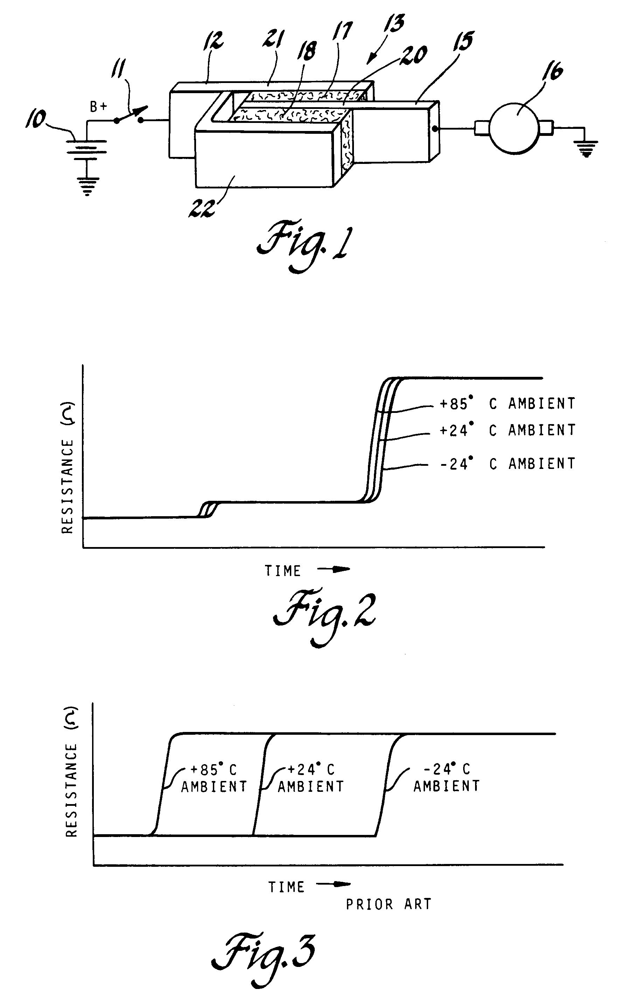

Referring to Figure 1, a source of DC electric power is represented as battery 10, which has one terminal grounded and another at supply voltage B+ connected through a switch 11 to a terminal 12 of a protection device 13. Protection device 13 has another terminal 15 connected in series with the armature of a (DC permanent magnet) motor 16 to ground. Thus, when switch 11 is closed, armature current flows from battery 10 through protection device 13 in series with the armature of motor 16.

Protection device 13 comprises two polymer PTC elements 17 and 18, each having a different trip temperature between low and high resistances. The low resistance of each (which are not necessarily the same) is a value essentially negligible to affect the armature current of motor 16, such as 0.5 ohm or less. This resistance is almost constant up to the trip temperature, above which it increases greatly to a value such as fifty ohms or more, which is effective to limit the armature current of motor 16 for its protection.

Polymer PTC elements 17 and 18 are both in electrical and thermal contact with an extension 20 of terminal 15. Polymer PTC element 17 is in electrical contact with an extension 21 of terminal 12; and polymer PTC element 18 is in electrical contact with an electrically conducting member 22 connected to terminal 12. Extension 21 and electrically conducting member 22 extend from terminal 12 in a Y configuration parallel to each other and to extension 20 of terminal 15, with extension 20 extending thereinto from the open end of the Y. Extension 20 is sandwiched between polymer PTC elements 17 and 18, with the combination thereof sandwiched between extension 21 and electrically conducting member 22. Thus, polymer PTC elements 17 and 18 are connected electrically in parallel with each other and in series with terminals 12 and 15. In addition, polymer PTC elements 17 and 18 are in thermal contact, over a wide area through extension 20, so that heat from one raises the temperature of the other.

Polymer PTC element 17, the ambient temperature compensating element, has a cold resistance below a trip temperature which is effective with armature current flowing therethrough to generate heat to raise its temperature to the trip temperature, at which the resistance greatly increases to a higher resistance effective to render the element self regulating at the trip temperature. The trip temperature is set just above the maximum expected ambient temperature to which protection device 13 is to be exposed. When switch 11 is first closed, a current flows through polymer PTC element 17 to heat it quickly to its trip temperature, which may be, for example, 85 degrees C. The heat generated by polymer PTC element 17 also raises the temperature of polymer PTC element 18, since the two are in thermal contact. When polymer PTC element 17 trips, its resistance increases greatly, which reduces its power dissipation. From this point on, it operates as a self regulating temperature maintenance element for polymer PTC element 18.

Polymer PTC element 18 also has a resistance which generates heat; but it trips at a temperature higher than does polymer PTC element 17 by an amount sufficient to require excessive armature current to raise the temperature thereof to its trip temperature. A convenient trip temperature for polymer PTC element 18 is 135 degrees C. Its resistance below its trip temperature is lower than that of polymer PTC element 17 and is essentially negligible in its effect on the armature current of motor 16; but, when it trips, its resistance increases greatly to a level sufficient to protectively limit the armature current of motor 16.

After polymer PTC element 17 warms up to its trip temperature of 85 degrees C, it maintains element 18 at this temperature until a condition develops which causes an excessive current flow through motor 16 and protection device 13. Most of this current flow will be through polymer PTC element 18, since the resistance of polymer PTC element 17, greater than that of polymer PTC element 18 when cold, has increased still further. Since polymer PTC element 18 essentially always starts from the same temperature, regardless of ambient temperature, it always takes approximately the same time to trip; and this time is controllable through the design parameters of protection device 13. The excessive current may be a fault current such as results from a short circuit, but it does not have to be.

Some motors are designed for short term, intermittent use with an armature current that does no damage in such use but may burn the motor out in longer term, continuous operation. In the latter case, the excessive current is present as soon as the switch is closed; and the fault condition is operation of the motor continuously for too long a period. Protection device 13 will protect against either type of fault.

The effect of the temperature compensating polymer PTC element can be seen by comparing Figure 2, resistance vs. time with the element (Figure 3, resistance vs. time) without it. The time and resistance scales of the Figures are not necessarily identical: the Figures indicate the general behavior of the protection devices. In Figure 3, the time from initial excessive current to trip temperature is shown for three ambient temperatures: +85C, +24C and -24C. The trip time may be identified as the portion of the curve where the resistance increases greatly, which portion is labeled with the ambient temperature. The time is seen to vary greatly, inversely with ambient temperature. Figure 2 shows the times for the same ambient temperatures for the present invention. Due to the fact that the temperature compensating polymer PTC element causes the protection device to start from approximately the same temperature regardless of ambient temperature, the time difference is greatly reduced.

## Claims

1. An electric motor armature current control circuit comprising an electric motor (16) having a field and an armature with armature windings; an electric power supply (10); and a protection device (13) comprising a first PTC element (17) having a first trip temperature higher than the maximum expected ambient temperature to which the first PTC element is to be exposed in motor operation, above the first trip temperature the resistance increasing greatly from a low resistance to a high resistance, and a second PTC element (18) connected in electrical parallel with the first PTC element and in thermal contact therewith for being maintained at least at the first trip temperature, the second PTC element having a second trip temperature sufficiently higher than the first PTC element and above the second trip temperature the second PTC element resistance increasing greatly from a low resistance lower than that of the first PTC element to a high resistance; characterised in that the protection device (13) is connected in series with the motor armature windings and electric power supply, whereby any armature winding current also flows through the protection device, the first and second PTC elements (17,18) being of the polymer type and being connected in electrical series with the motor armature windings, the first PTC element having a resistance effective to generate heat with armature winding current flow therethrough, the heat generated by normal armature current being effective to raise the temperature of the first PTC element above the first trip temperature and the resulting high resistance being effective to reduce electric current therethrough sufficiently as to make the first PTC element self regulating at the first trip temperature; the second PTC element having a resistance effective to generate heat with armature winding current flow therethrough and requiring an excessive armature winding current to raise the temperature of the second PTC element to the second trip temperature, the low resistance of the second PTC element being essentially negligible in its effect on the armature winding current, and the high resistance of the second PTC element protectively limiting the armature winding current, the first PTC element also having, at the second trip temperature, a high resistance protectively limiting the armature winding current, whereby the protection device (13) limits excessive armature winding current after a period of time independent of ambient temperature.

2. An electric motor armature current control circuit as claimed in claim 1, in which the first and second trip temperatures are substantially 85 and 135 degrees C, respectively.

3. An electric motor armature current control circuit as claimed in claim 1 or claim 2, in which the protection device (13) has a pair of terminals (12,15) for connection in series with the motor armature windings, one (15) of the terminals having an extension (20) extending between the first and second polymer PTC elements (17,18) for electrical connection to one side of each and thermal connection to both, and the other (12) of the terminals having parallel extensions (21,22) in a Y configuration to the other side of each polymer PTC element with the extension (20) of the one (15) of the terminals extending parallel between the parallel extensions of the other (12) of the terminals and the polymer PTC elements so as to connect the first and second polymer PTC elements in electrical parallel between the terminals.

## Patentansprüche

1. Eine Ankerstromregelungsschaltung für einen Elektromotor mit einem Elektromotor (16), der ein Feld und einen Anker mit Ankerwicklungen besitzt; einer elektrischen Energieversorgung (10); und einer Schutzvorrichtung (13), welche ein erstes PTC-Element (17) aufweist, das eine erste Auslösetemperatur besitzt, die höher als die maximale, erwartete Umgebungstemperatur liegt, der das erste PTC-Element bei einem Motorbetrieb ausgesetzt werden soll, wobei oberhalb der ersten Auslösetemperatur der Widerstand von einem niedrigen Widerstand auf einen hohen Widerstand stark zunimmt, und ein zweites PTC-Element (18), das mit dem ersten PTC-Element elektrisch parallel und in thermischem Kontakt damit verbunden ist, damit es mindestens bei der ersten Auslösetemperatur gehalten wird, wobei das zweite PTC-Element eine zweite Auslösetemperatur besitzt, die ausreichend höher als die des ersten PTC-Elements liegt, und oberhalb der zweiten Auslösetemperatur der Widerstand des zweiten PTC-Elements von einem niedrigen Widerstand, der niedriger als der des ersten PTC-Elements ist, auf einen hohen Widerstand stark zunimmt; dadurch gekennzeichnet, daß die Schutz-Vorrichtung (13) in Reihe geschaltet ist mit den Motorankerwicklungen und der elektrischen Energieversorgung, wodurch irgendein Ankerwicklungsstrom auch durch die Schutzvorrichtung fließt, daß die ersten und zweiten PTC-Elemente (17, 18) von dem Polymertyp sind und in elektrischer Reihenschaltung mit den Motorankerwicklungen verbunden sind, daß das erste PTC-Element einen effektiven Widerstand besitzt, um Wärme mit einen Ankerwicklungsstromfluß da hindurch zu erzeugen, daß die durch einen normalen Ankerstrom erzeugte Wärme effektiv ist, um die Temperatur des ersten PTC-Elements über die erste Auslösetemperatur anzuheben, und der resultierende hohe Widerstand effektiv ist, um einen elektrischen Strom da hindurch ausreichend zu reduzieren, um das erste PTC-Element bei der ersten Auslösetemperatur selbstregulierend zu machen; daß das zweite PTC-Element einen effektiven Widerstand zur Erzeugung von Wärme mit einem Ankerwicklungsstromfluß da hindurch besitzt und einen übermäßigen Ankerwicklungsstrom erfordert, um die Temperatur des zweiten PTC-Elements auf die zweite Auslösetemperatur anzuheben, daß der niedrige Widerstand des zweiten PTC-Elements im wesentlichen vernachlässigbar ist in seiner Wirkung auf den Ankerwicklungsstrom und der hohe Widerstand des zweiten PTC-Elements den Ankerwicklungsstrom schützend begrenzt, und daß das erste PTC-Element bei der zweiten Auslösetemperatur auch einen hohen Widerstand besitzt, der schützend den Ankerwicklungsstrom begrenzt, wodurch die Schutzvorrichtung (13) einen übermäßigen Ankerwicklungsstrom nach einer von der Umgebungstemperatur unabhängigen Zeitspanne begrenzt.

2. Eine Ankerstromregelungsschaltung für einen Elektromotor nach Anspruch 1, in welcher die ersten und zweiten Auslösetemperaturen im wesentlichen 85 beziehungsweise 135 Grad Celsius betragen.

3. Eine Ankerstromregelungsschaltung für einen Elektromotor nach Anspruch 1 oder Anspruch 2, in welcher die Schutzvorrichtung (13) ein Paar von Anschlußstellen (12, 15) aufweist zur Reihenschaltung mit den Motorankerwicklungen, wobei eine (15) der Anschlußstellen eine Verlängerung (20) besitzt, die sich zwischen den ersten und zweiten PTC-Elementen (17, 18) erstreckt für eine elektrische Verbindung mit einer Seite von jedem und eine thermische Verbindung mit beiden, und die andere (12) der Anschlußstellen parallele Verlängerungen (21, 22) in einer Y-Konfiguration zu der anderen Seite von jedem Polymer-PTC-Element aufweist, wobei die Verlängerung (20) von der einen (15) der Anschlußstellen sich parallel zwischen den parallelen Verlängerungen von der anderen (12) der Anschlußstellen und den Polymer-PTC-Elementen erstreckt, um die ersten und zweiten Polymer-PTC-Elemente in elektrischer Parallelschaltung zwischen den Anschlußstellen zu verbinden.

## Revendications

1. Circuit de commande de courant d'un induit de moteur électrique comprenant un moteur électrique (16) ayant des enroulements d'inducteur et d'induit ; une alimentation électrique (10) ; et un dispositif de protection (13) comprenant un premier élément CTP (17) ayant une première température de déclenchement supérieure au maximum attendu pour la température ambiante à laquelle ledit premier élément CTP est exposé pendant le fonctionnement du moteur, la résistance dudit élément CTP augmentant considérablement, au-delà de la première température de déclenchement, à partir d'une résistance basse et jusque vers une résistance haute, et un second élément CTP (18) connecté électriquement en parallèle avec ledit premier élément CTP et en contact thermique avec lui, de façon à être maintenu à une température au moins égale à ladite première température de déclenchement, le second élément CTP ayant une seconde température de déclenchement suffisamment plus élevée que celle du premier élément CTP, et la résistance dudit second élément CTP augmentant considérablement, au-delà de la seconde température de déclenchement, à partir d'une résistance plus basse que celle du premier élément CTP, vers une résistance élevée ; caractérisé en ce que le dispositif de protection (13) est connecté en série avec les enroulements d'induit du moteur et avec l'alimentation électrique de façon à ce que tout courant d'induit traverse également le dispositif de protection, les premier et second éléments CTP (17, 18) étant du type polymère et étant connectés électriquement en série avec les enroulement d'induit du moteur, le premier élément CTP ayant une résistance propre à générer de la chaleur lorsqu'il est traversé par le courant d'induit, la chaleur générée par un courant d'induit normal étant suffisante pour augmenter la température du premier élément CTP au-delà de la première température de déclenchement, et la résistance élevée qui en découle étant appropriée pour réduire suffisamment le courant électrique à travers ledit élément pour rendre ledit élément CTP autorégulateur à ladite première température de déclenchement ; le second élément CTP ayant une résistance propre à générer de la chaleur lorsqu'il est traversé par un courant d'induit et nécessitant un courant d'induit en excès pour augmenter la température du second élément CTP et la porter à la seconde température de déclenchement, la résistance basse du second élément CTP ayant un effet essentiellement négligeable sur le courant d'induit, et la résistance du second élément CTP limitant le courant d'induit de façon protectrice, le premier élément CTP ayant également, à la seconde température de déclenchement, une résistance élevée limitant le courant d'induit de façon protectrice, de façon à ce que le dispositif de protection (13) limite le courant d'induit en excès après une période de temps indépendante de la température ambiante.

2. Circuit de commande de courant d'un induit de moteur électrique suivant la revendication 1, dans lequel les première et seconde températures de déclenchement sont respectivement de l'ordre de 85° et 135°C.

3. Circuit de commande de courant d'un induit de moteur électrique suivant la revendication 1 ou la revendication 2, dans lequel le dispositif de protection (13) possède une paire de bornes (12, 15) connectées en série avec les enroulements d'induit du moteur, l'une desdites bornes (15) possédant un prolongement (20) s'étendant entre le premier et le second éléments polymères CTP (17, 18) pour établir une connexion électrique sur un côté de chaque élément et une connexion thermique avec chaque élément, et l'autre borne (12) ayant des prolongements parallèles (21, 22) disposés en forme de Y de l'autre côté de chaque élément polymère CTP, le prolongement (20) de l'une des bornes (15) s'étendant parallèlement entre les prolongements parallèles de l'autre borne (12) et les éléments polymères CTP, de façon à connecter électriquement les premier et second éléments polymères CTP en parallèle entre les bornes.
